# EUROPÄISCHE PATENTSCHRIFT

(11) **EP 2 343 506 B1**
(45) Veröffentlichungstag und Bekanntmachung des Hinweises auf die Patenterteilung: **26.06.2013**
(21) Anmeldenummer: 10150088.2
(22) Anmeldetag: 05.01.2010
(51) Int. Cl.: G01D 5/14

(54) **Längenmessvorrichtung**
Length measuring device
Dispositif de mesure de longueur

(30) Priorität: 22.12.2009 EP 09180353
(43) Veröffentlichungstag der Anmeldung: 13.07.2011
(73) Patentinhaber: SICK STEGMANN GmbH, 78166 Donaueschingen (DE)
(72) Erfinder: Siraky, Josef, 78166 Donaueschingen (DE); Grieshaber, Florian, 78141 Schönwald (DE)
(74) Vertreter: Hehl, Ulrich

(56) Entgegenhaltungen:
- EP-A2- 0 909 962
- DE-A1- 3 225 500
- DE-B3-102004 013 022

## Beschreibung

Die Erfindung betrifft eine Längenmessvorrichtung und ein Verfahren zu Längenmessung nach dem Oberbegriff von Anspruch 1 beziehungsweise 12.

Ein bekanntes magnetisches Längenmesssystem arbeitet auf Basis des Wiegand-Effekts. Ein Wiegand-Draht besteht aus einem weichmagnetischen Kern und einem hartmagnetischen Mantel. Sind zunächst die Magnetfelder von Kern und Mantel gleichgerichtet und wird der Wiegand-Draht in ein äußeres Magnetfeld mit entgegengesetzter Polarität eingebracht, so kehrt sich sprunghaft die Magnetisierungsrichtung des Kerns und bei noch stärkerem äußerem Magnetfeld auch des Mantels um. Jeder Wechsel der Magnetisierung des Wiegand-Drahtes wird durch Induktion eines Spannungsstoßes in einer den Wiegand-Draht umgebenden Spule registriert. Der stärkste, als Zünden bezeichnete Spannungsstoß entsteht, wenn sich nur die Polarität des Kerns umkehrt und sich dabei der Polarität des Mantels anpasst. Aus diesem Grund bezeichnet man die umgekehrte Ummagnetisierung des Kerns gegenüber dem Mantel auch als Vorspannen.

Ein wichtiges Anwendungsfeld für magnetische Längenmesssysteme ist die Automatisierungstechnik, wo häufig die Anforderung besteht, die Position einer linearen Bewegungseinrichtung zu erfassen. Ein solches Längenmesssystem wird auch Bahnmesssystem genannt. Derartige Längenmesssysteme arbeiten häufig inkremental. Beim Einschalten der Anlage muss dann eine Referenzfahrt durchgeführt werden, um aus den inkrementalen Informationen eine absolute Position zu gewinnen.

Dies wird in absoluten magnetischen Längenmesssystemen vermieden. Die Position auf der Längenskala wird dabei in den Messteilungen codiert. Der Lesekopf arbeitet dann aktiv mit einer eigenen Energieversorgung, um die unterschiedlich magnetisierten Zonen der Messteilungen zu interpretieren und daraus eine Absolutposition zu errechnen.

Die Maßverkörperung herkömmlicher absoluter Längenmesssysteme erfordert eine aufwändige und damit kostenträchtige Codierung. Außerdem ist der Lesekopf entsprechend der Anzahl der Codierspuren aufwändiger zu gestalten. Zusätzlich hängt die höchstmögliche auswertbare Länge einer Maßverkörperung von der Mächtigkeit der Codierung ab. Je länger also das Längenmesssystem werden soll, desto mächtiger muss die Codierung sein, desto mehr Codespuren werden erforderlich und desto aufwändiger werden Maßverkörperung und Lesekopf.

Ein weiterer Nachteil herkömmlicher Lösungen liegt in dem hohen Aufwand für die Herstellung der Maßverkörperung. Dabei werden üblicherweise Magnete mit abwechselnder Polarität quer zu der Längserstreckung der Maßverkörperung angeordnet, beziehungsweise ein magnetisches Trägermaterial wird entsprechend magnetisiert. Die benötigte Anzahl von Magneten ist proportional der zu messenden Länge, und daher ist eine solche Maßverkörperung relativ kostenintensiv. Zudem lassen Unterschiede in der Magnetisierung der einzelnen Magnete keine äquidistanten Zählabstände zu. In einem industriellen Umfeld stört auch, dass die Magnete der Maßverkörperung magnetische Teile anziehen, wie beispielsweise Eisenspäne oder kleine Schrauben.

Aus der DE 34 08 478 C1 ist eine Vorrichtung zur inkrementalen Drehwinkel- oder Längenmessung bekannt. Dabei ist ein geradliniger Träger mit einer als Nuten ausgebildeten Messteilung vorgesehen. In jeder Nut befindet sich quer zu dem Träger ein Wiegand-Draht, wobei die Nut breiter ist als der Wiegand-Draht. Fährt ein Abtastkopf, der zwei Magnete mit zueinander umgekehrter Polarität quer zu dem Träger und damit parallel zu den Wiegand-Drähten aufweist, über eine Nut, so löst dies zunächst die Ummagnetisierung des Kerns des Wiegand-Drahtes aus. Der Wiegand-Draht springt dann wegen seiner veränderten Magnetisierung an das andere Ende der Nut, wo die magnetische Feldstärke hoch genug ist, auch die Magnetisierung des Mantels umzukehren. Somit wird durch die breiteren Nuten erreicht, dass auch bei einer Bewegungsumkehr nach dem ersten Zünden wohldefinierte magnetische Verhältnisse vorliegen und so kein Wiegand-Impuls ausbleibt, was zu einer Fehlzählung führen würde.

Nachteilig an diesem Stand der Technik ist die aufwändige Maßverkörperung mit ihren Nuten, Abdeckungen und einer den Messteilungen entsprechenden Vielzahl von Wiegand-Drähten. Die inkrementale Längenmessung bringt außerdem die oben erläuterten Nachteile gegenüber einer Absolutmessung, beispielsweise die Notwendigkeit einer Referenzfahrt mit sich.

Die DE 32 25 500 A1 befasst sich mit einem magnetischen Fühler, der einen Wiegand-Draht und eine zugehörige Sensorwicklung zwischen zwei antiparallel angeordneten Dauermagneten aufweist. Wird ein Zahn eines Zahnrades an den Magneten vorbeigeführt, so wird nacheinander der eine und der andere Magnet magnetisch praktisch kurzgeschlossen. Dadurch wird die Magnetisierungsrichtung in dem Wiegand-Draht plötzlich geändert, und dadurch wird in der Sensorwicklung ein Spannungsimpuls induziert, welcher einer angeschlossenen Auswerteschaltung zugeführt werden kann. Eine ähnliche Vorrichtung, die zur Bestimmung von Position und Geschwindigkeit eines Zahnrads eingesetzt werden kann, ist aus der EP 0 909 962 A2 bekannt.

In der DE 10 2004 013 022 B3 sind drei E-förmige Joche vorgesehen, an deren beiden äußeren Schenkeln Permanentmagnete und an deren Mittelschenkel ein Wiegand-draht-Sensor angeordnet ist. In einer rotatorischen Ausführungsform sind die so entstehenden drei Sensoren im 120°-Abstand gleichmäßig über den Umfang verteilt. Einer der Sensoren dient als Referenz und zählt Umdrehungen, während die beiden anderen Sensoren die Drehrichtung erfassen, so dass ein Absolutwertzähler entstehen kann. In einer Ausführungsform ist das Zusammenwirken mit einem zusätzlichen Drehgeber als Feinwinkelsensor vorgesehen.

Es ist daher Aufgabe der Erfindung, ein Längenmesssystem mit einer einfacheren Maßverkörperung anzugeben.

Diese Aufgabe wird durch ein Längenmesssystem nach Anspruch 1 und ein Verfahren zur Längenmessung nach Anspruch 12 gelöst. Dabei geht die Erfindung von dem Grundgedanken aus, aufwändigere Bauteile in dem Lesekopf unterzubringen und somit nur einmal statt einmal je Messteilung vorzusehen. Der Wiegand-Draht und die Lesekopfmagnete, mit denen der Wiegand-Effekt ausgelöst wird, werden deshalb mit dem Lesekopf mitbewegt. Um die erforderliche Änderung des Magnetfelds bei Vorbeifahren an den Messteilungen zu erzeugen, wird das Magnetfeld eines der Lesekopfmagneten vorübergehend unterdrückt. Dazu umfassen die Messteilungen der Maßverkörperung magnetische Kurzschlusselemente. In jeweils einer Relativposition des Lesekopfes zu der Maßverkörperung ist das Magnetfeld eines Lesekopfmagneten kurzgeschlossen und wirkt somit nicht oder nur abgeschwächt magnetisch auf den Wiegand-Draht, der sich somit vor allem in dem verbleibenden Magnetfeld des anderen Lesekopfmagneten befindet.

Die Erfindung hat den Vorteil, dass die Maßverkörperung selbst sehr einfach ist und praktisch auf die Materialkosten von Stahl- oder Eisenblech reduziert werden kann. Die Messteilungen können äquidistant beispielsweise im Abstand einiger Zentimeter zueinander angebracht werden. Jegliche aufwändige Ausgestaltung der Messteilungen entfällt, beispielsweise Magnete, Nuten oder Wiegand-Drähte. Es können Maßverkörperungen beliebiger Länge völlig gleichartig hergestellt werden.

Das bistabile magnetische Element weist bevorzugt einen weichmagnetischen Kern und einen hartmagnetischen Mantel auf und zeigt bei Einführen in ein äußeres magnetisches Magnetfeld entgegengesetzter Polarität eine sprunghafte Ummagnetisierung des Kerns und/oder des Mantels, wobei das bistabile magnetische Element insbesondere ein Wiegand-Draht ist. Der Begriff bistabiles magnetisches Element ist eine Verallgemeinerung des Begriffs Wiegand-Draht. Damit sind magnetische Elemente gemeint, die große zusammengehörige Bereiche unterschiedlicher magnetischer Härte beziehungsweise Koerzitivkraft aufweisen und die somit einen großen, reproduzierbaren Barkhausen-Sprung beim Umklappen eines dieser zusammengehörigen Bereiche zeigen. Derartige bistabile magnetische Elemente liefern in einem äußeren Magnetfeld einen deutlich nachweisbaren induzierten Impuls, der für die Zählung der Längenmessung ausgewertet wird. Der Wiegand-Draht ist ein sehr bekanntes und bewährtes Beispiel eines bistabilen magnetischen Elements. Die konkreten Geometrien, Materialien oder Herstellungsverfahren der bistabilen magnetischen Elemente sind weniger wichtig als die induzierten Spannungsstöße, wobei deren Ausprägung durch die konkrete Ausgestaltung des bistabilen magnetischen Elements optimierbar ist.

Dem bistabilen magnetischen Element ist bevorzugt eine Spule zugeordnet, wobei in die Spule bei Ummagnetisierung des bistabilen magnetischen Elements ein Spannungsstoß induzierbar ist. Somit wird der Wiegand-Effekt für das Längenmesssystem nachweisbar. Das bistabile magnetische Element ist besonders bevorzugt in einem Innenraum der Spule angeordnet, um den Spannungsstoß zu maximieren.

Vorteilhafterweise ist ein nichtflüchtiger Zähler vorgesehen, welcher die durch Relativbewegung des Lesekopfes gegenüber der Maßverkörperung überfahrenen Messteilungselemente zählt, insbesondere indem der Zählerstand aufgrund von durch das bistabile magnetische Element induzierten Spannungsstößen herauf- oder herabzählbar ist. Der nichtflüchtige Zähler wird durch den Spannungsstoß versorgt und ist somit energieautark. Auf diese Weise steht das Zählsignal unabhängig von einem Aktivierungszustand der Längenmessvorrichtung oder der Anlage zur Verfügung, in der sie eingesetzt ist.

Dabei ist besonders bevorzugt eine Auswertungseinheit vorgesehen, in welcher aus dem Zählerstand die Absolutposition des Lesekopfes gegenüber der Maßverkörperung bestimmbar ist, so dass die Längenmessvorrichtung als absolute Längenmessvorrichtung ausgebildet ist. Effektiv entsteht aus dem inkrementalen Zählsignal ein absolutes Positionssignal, weil der Zählerstand nie verloren geht. Referenzfahrten oder dergleichen sind nicht notwendig. Die Maßverkörperung bedarf trotz der ausgegebenen Absolutpositionen keiner aufwändigen Codierung und lässt praktisch beliebige Längen zu, die lediglich noch von der Zählerbreite abhängt. Bei Messteilungen von einigen Zentimetern Abstand genügt schon ein 8-Bit-Zähler für Größenordnungen von einigen Metern, mit einem 16-Bit- oder gar einem 32-Bit-Zähler sind auch bei dichteren Messteilungen alle praktisch erforderlichen Längen erfassbar.

Bevorzugt ist mindestens ein zusätzlicher Magnetsensor vorgesehen, insbesondere ein Hall-Sensor, ein AMR-Sensor (anisotropic magnetoresistance) oder ein GMR-Sensor (giant magnetoresistance), wobei in einer Auswertungseinheit mit dem zusätzlichen Magnetsensor eine Richtung der Relativbewegung des Lesekopfes gegenüber der Maßverkörperung und/oder eine Zwischenposition des Lesekopfes gegenüber benachbarten Messteilungselementen bestimmbar ist , insbesondere indem der Lesekopf mehrere nebeneinander angeordnete Magnetsensoren aufweist, um die Stärke des Magnetfeldes an den jeweiligen Positionen der Magnetsensoren zu vergleichen. Über die Bewegungsrichtung werden Zählimpulse mit korrekter Zählrichtung gewertet, damit der Zählerstand unabhängig von einem Bewegungsmuster des Lesekopfes dessen Absolutposition auf der Maßverkörperung repräsentiert. Über die Zwischenposition wird die Messgenauigkeit der Längenmessung über den Abstand zwischen zwei Messteilungselementen hinaus verfeinert.

Die Auswertungseinheit und/oder der zusätzliche Magnetsensor sind bevorzugt durch von dem bistabilen magnetischen Element induzierte Spannungsstöße mit Energie versorgbar. Somit ist die Längenmessvorrichtung energieautark. Besonders wichtig ist die Unabhängigkeit des Zählers von einer externen Energieversorgung, damit stets die Absolutposition bekannt bleibt. Im eigentlichen aktiven Betrieb der Anlage und der Längenmessvorrichtung ist eine zusätzliche Energieversorgung leichter möglich. Vorteilhaft ist dennoch, wenn so viele Elemente wie möglich energieautark arbeiten. Für eine Interpolation zwischen zwei Messteilungselementen ist energieautarkes Arbeiten nur in Grenzen möglich, solange genug kontinuierliche Relativbewegung stattfindet. Steht der Lesekopf still, oder bewegt er sich nur zwischen zwei Messteilungselementen, so bleiben die Spannungsstöße aus, und es steht hieraus keine Energie zur Verfügung. Der Zählerstand ändert sich dabei nicht, beziehungsweise sobald ein Messteilungselement zu zählen ist, stellt es auch über den erzeugten Spannungsstoß die für das Zählen erforderliche Energie zur Verfügung.

Die Kurzschlusselemente weisen bevorzugt einen u-förmigen Bügel auf, dessen Enden die Pole des ersten Lesekopfmagneten oder des zweiten Lesekopfmagneten in der ersten Relativposition beziehungsweise der zweiten Relativposition umschließen. Solche Kurzschlusselemente sind sehr einfach herzustellen und unterdrücken zugleich besonders effektiv das Magnetfeld des jeweils bei einen Messteilungselement befindlichen Lesekopfmagneten. Alternativ sind erster Lesekopfmagnet und zweiter Lesekopfmagnet hufeisenförmig und die Kurzschlusselemente langgestreckt ausgebildet, um die Pole des Hufeisens kurzzuschließen. Das hat den Vorteil, dass besonders einfache Messteilungselemente Verwendung finden und damit eine kostengünstige und noch leichter handhabbare Maßverkörperung entsteht.

Die Kurschlusselemente, insbesondere die Maßverkörperung mitsamt den Messteilungselementen, weist bevorzugt magnetisches Material wie Stahl oder Eisen auf. Es ist besonders unaufwändig, die Maßverkörperung samt Messteilungselementen und Kurzschlusselementen einheitlich aus demselben Material herzustellen. Kurzschlusselemente aus Stahl oder Eisen sind gegenüber anderen magnetischen Materialien kostengünstig.

Das bistabile magnetische Element und die Lesekopfmagnete sind bevorzugt parallel zueinander ausgerichtet, wobei die Lesekopfmagnete in jeweils gleichem Abstand zu beiden Seiten des bistabilen magnetischen Elements angeordnet sind, insbesondere so, dass die Lesekopfmagnete zueinander einen kleineren Abstand aufweisen als zwei benachbarte Messteilungselemente. In dieser Anordnung wirken die Lesekopfmagnete besonders effektiv und in klar auswertbarer Abhängigkeit von der Lage gegenüber den Messteilungselementen auf das bistabile magnetische Element.

In einer bevorzugten Weiterbildung der Erfindung weist die langgestreckte Maßverkörperung Verwindungen oder Bögen auf, um sich an unterschiedliche auszumessende Geometrien anzupassen. Auch derartig dreidimensional verformte Maßverkörperungen werden in dieser Beschreibung als langgestreckt aufgefasst, weil der Lesekopf sich in der Längserstreckung bewegt, wenn auch möglicherweise entlang komplizierter Kurvenzüge. Das Messprinzip erlaubt, Maßverkörperungen mit Geraden und Bögen auszubilden, die Maßverkörperung also nahezu beliebig zu verbiegen. So ist auch eine dreidimensionale geometrische Gestaltung möglich, die ein größeres Anwendungsfeld für die erfindungsgemäße Längenmessvorrichtung erschließt.

So kann die Längenmessvorrichtung bevorzugt auch als Drehwinkelmessvorrichtung ausgebildet sein, indem die langgestreckte Maßverkörperung kreisförmig gebogen ist. Die gemessene Länge ist dann ein Kreisbogenstück, somit ein Winkel im Bogenmaß in Einheiten des Kreisradius'. Damit wird das mögliche Einsatzgebiet der Längenmessvorrichtung nochmals erweitert.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an den Vorrichtungsanspruch anschließenden abhängigen Ansprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Draufsicht auf einen Lesekopf einer erfindungsgemäßen Längenmessvorrichtung;
- Fig. 2: eine Draufsicht auf eine erfindungsgemäße Maßverkörperung, über der ein Lesekopf gemäß Figur 1 angeordnet ist;
- Fig. 3: eine dreidimensionale Ansicht der Maßverkörperung gemäß Figur 2 mit einer vereinfachten Darstellung einiger Elemente des Lesekopfes zur Verdeutlichung der räumlichen Anordnung;
- Fig. 4: eine vereinfachte Schnittdarstellung eines erfindungsgemäßen Lesekopfes zur Erläuterung der Interpolation zwischen Messteilungen;
- Fig. 5: eine beispielhafte Spannungsmessung an einer Zwischenposition des Lesekopfes gemäß Fig. 4;
- Fig. 6a: eine Querschnittsdarstellung einer Ausführungsform des Lesekopfes als Hufeisenmagnet;
- Fig. 6b: eine Draufsicht auf eine Maßverkörperung mit langgestreckten Messteilungen für den Lesekopf gemäß Figur 6a; und
- Fig. 7: einen Längsschnitt einer zu einem Kreis angeordneten Maßverkörperung.

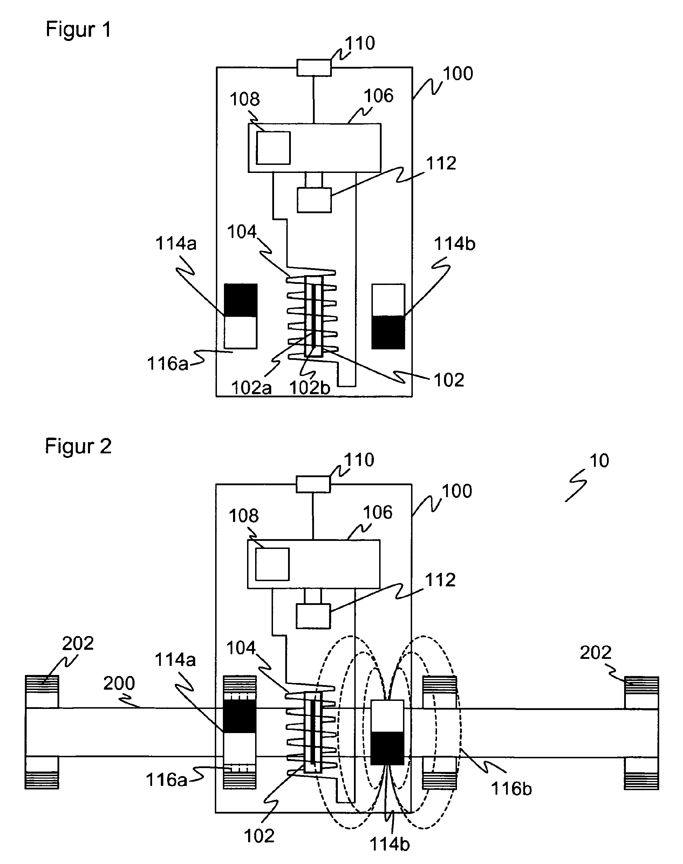

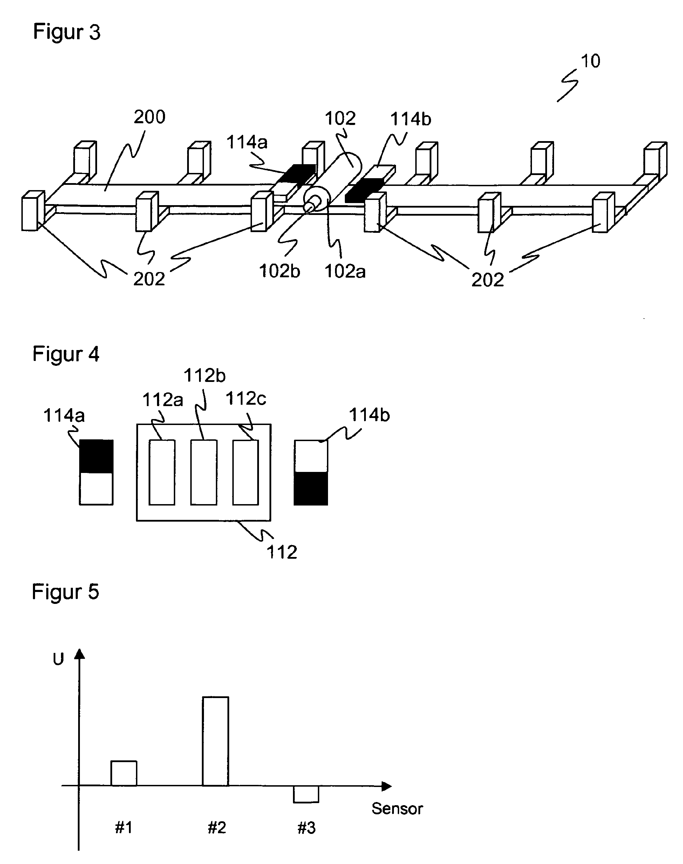

Figur 1 zeigt eine schematische Draufsicht auf einen Lesekopf 100 einer erfindungsgemäßen Längenmessvorrichtung. Ein Wiegand-Draht 102 mit einem weichmagnetischen Kern 102a und einem hartmagnetischen Mantel 102b ist im Innenraum einer Spule 104 angeordnet. Die beiden Enden der Spule 104 sind mit einer Auswertungseinheit 106 verbunden, die einen Zähler 108 mit einem nichtflüchtigen Speicher aufweist. Die Auswertungseinheit 106 steuert außerdem einen Ausgang 110 an. Zusätzlich oder alternativ kann eine nicht dargestellte Anzeige vorgesehen sein. Ein zusätzlicher magnetischer Sensor 112, beispielsweise ein Hallsensor, ein AMR-Sensor oder ein GMR-Sensor, ist an die Auswertungseinheit 106 angeschlossen. Der zusätzliche Sensor 112 kann auch mehrere magnetische Sensoren aufweisen und wird weiter unten im Zusammenhang mit Figur 4 näher erläutert.

Zu beiden Seiten des Wiegand-Drahts 102 ist jeweils ein beispielsweise als stabförmiger Permanentmagnet ausgebildeter Lesekopfmagnet 114a-b angeordnet. Die beiden Lesekopfmagnete 114a-b sind parallel zueinander und zu dem Wiegand-Draht 102 und, wie durch Schwärzung des einen Endes illustriert, zueinander in entgegengesetzter Polarität ausgerichtet.

Figur 2 zeigt eine erfindungsgemäße Längenmessvorrichtung 10, bei welcher der Lesekopf 100 über einer Maßverkörperung 200 angeordnet ist. Hier wie im Folgenden bezeichnen gleiche Bezugszeichen die gleichen Merkmale. In äquidistanten Abständen sind als Messteilung im Abstand von einigen Zentimetern zueinander, beispielsweise von vier Zentimetern, Kurzschlusselemente 202 aneinander gereiht. Wie in der dreidimensionalen Darstellung der Figur 3 besser zu erkennen, sind die Kurzschlusselemente 202 beispielsweise als u-förmige Kurzschlussbügel ausgebildet. Dabei sind zur besseren Übersicht in Figur 3 statt des ganzen Lesekopfes 100 nur der Wiegand-Draht 102 und die beiden Lesekopfmagnete 114a-b gezeigt. Die Kurzschlussbügel 202 sind aus einem magnetischen Material hergestellt, beispielsweise aus Eisen oder Stahl.

Im Betrieb der Längenmessvorrichtung 10 wird der Lesekopf 100 relativ zu der Maßverkörperung 200 verfahren. Die beiden Lesekopfmagnete 114a-b werden dabei abwechselnd von den Kurzschlussbügeln 202 magnetisch kurzgeschlossen. Figur 2 zeigt eine Situation, wo der erste Lesekopfmagnet 114a sich in einem Kurzschlussbügel 202 befindet. Deshalb ist sein Magnetfeld 116a nach außen praktisch nicht wirksam. Verbleibende schwache Streufelder aufgrund eines nicht perfekten Kurzschlusses werden hier nicht berücksichtigt. In dem Wiegand-Draht 102 wirkt somit praktisch ausschließlich das Magnetfeld 116b des zweiten Lesekopfmagneten 114b.

In einer anderen Position des Lesekopfes 100 entsteht gerade die umgekehrte Situation, in welcher der erste Lesekopfmagnet 114a wieder frei wird und der zweite Lesekopfmagnet 114b in einem Kurzschlussbügel angeordnet ist und somit praktisch nur das Magnetfeld des ersten Lesekopfmagneten 114a mit umgekehrter Polarität auf den Wiegand-Draht 102 wirkt. In anderen Stellungen des Lesekopfes 100 befindet sich zeitweise keiner der Lesekopfmagnete 114a-b in einem Kurzschlussbügel. Dann überlagern sich die beiden Magnetfelder 116a-b beider Lesekopfmagnete 114a-b, wobei sie sich bei gleich starken Magneten und symmetrischer Anordnung am Ort des Wiegand-Drahtes 102 nahezu auslöschen.

Während der Bewegung des Lesekopfes 102 über der Maßverkörperung 200 dreht sich durch Anordnung des ersten Lesekopfmagneten 114a oder des zweiten Lesekopfmagneten 114b in einem Kurzschlusselement 202 die Polarität des auf den Wiegand-Draht 102 wirkenden Magnetfeldes 116a-b um. Der Wiegand-Draht 102 ändert seine Magnetisierung schlagartig und unabhängig von der Änderungsgeschwindigkeit, wenn eine bestimmte Magnetfeldstärke erreicht wird, beispielsweise in der Position mit kurzgeschlossenem ersten Lesekopfmagneten 114a. Dann zündet der Wiegand-Draht 102 und induziert einen Spannungsstoß in der Spule 104. Der Wiegand-Draht 102 wird mit entgegengesetzter Polarität neu vorgespannt, beispielsweise in der Position mit kurzgeschlossenem zweiten Lesekopfmagneten 114b.

Der in der Spule 104 induzierte Spannungsstoß wird in der Auswertungseinheit 106 registriert. Dabei wird die Energie des Spannungsstoßes ausgenutzt, um ohne zusätzliche Energieversorgung der Auswertungseinheit 106 das Passieren der Messteilungen 202 zu zählen und den Zählerstand in dem Zähler 108 nichtflüchtig zu speichern. Der Zähler 108 weist für die nichtflüchtige Speicherung beispielsweise ein FRAM (Ferroelectric Random Access Memory) auf.

Wie in Figur 4 gezeigt, weist in einer bevorzugten Ausführungsform der zusätzliche magnetische Sensor 112 insgesamt drei nebeneinander angeordnete Hall-Sensoren 112a-c auf, die alternativ auch mit einem anderen magnetischen Effekt als dem Hall-Effekt arbeiten, etwa einem der oben genannten. Der Wiegand-Draht 102 ist der Übersichtlichkeit halber weggelassen und befindet sich beispielsweise in einer anderen Tiefe, ist also gegenüber der Papierebene der Figur 4 versetzt. Die drei Hall-Sensoren 112a-c erkennen die absolute Position zwischen zwei Messteilungen 202 und erhöhen so die Messgenauigkeit auf Bruchteile des Abstands zweier Messteilungen 202.

Figur 5 zeigt rein beispielhaft die Hall-Spannungen der drei Hall-Sensoren 112a-c bei einer bestimmten Position des Lesekopfes 100. Verschiebt sich der Lesekopf 100, so ändern sich diese Hall-Spannungen mit jedem Positionswechsel durch den Ab- und Aufbau der Magnetfelder bei Eintritt und Austritt eines Lesekopfmagneten 114a-b in ein Kurzschlusselement 202. Die Auswertungseinheit 106 berechnet aus der Verschiebung des Hall-Spannungsverlaufes über die drei Hall-Sensoren 112a-c die Zwischenposition des Lesekopfes 100.

Die so bestimmte Zwischenposition wird mit der Zählerinformation des Zählers 108 verknüpft. So sind über den gesamten Messbereich Absolutmessungen mit Messgenauigkeiten weit unterhalb eines Millimeters erreichbar. Es ist auch denkbar, eine andere Anzahl von Hall-Sensoren 112a-c einzusetzen, wobei die Zahl Drei in vielen Anwendungen ein Optimum von Messgenauigkeit und apparativem Aufwand darstellt. In einer vereinfachten Ausführungsposition wird auf die Ermittlung und Auswertung von Zwischenpositionen verzichtet und die Längenmessung allein aus der Messteilung 202 ermittelt, deren absolute Position über den Zählerstand bekannt ist.

Die Auswertungseinheit 106 verwendet die Richtungsangabe des zusätzlichen magnetischen Sensors 112, um die Zählrichtung für den energieautarken Zähler 108 zu bestimmen. Dazu könnten die Informationen einer die Zwischenposition interpolierenden Anordnung mehrerer Hallsensoren 112-ac verwendet werden. Besonders vorteilhaft ist, einen nicht dargestellten zusätzlichen Hall-Sensor mit geringster Leistungsaufnahme für die Richtungsbestimmung einzusetzen, der allein durch die Spannungsstöße des Wiegand-Drahts 102 mit Energie versorgt wird.

Dann arbeitet die Längenmessung völlig energieautark mit der Auflösung der Messteilungen 202, da Zähler 108, richtungsbestimmender Hall-Sensor und die zugehörige Logik von dem Wiegand-Draht 102 versorgt wird. Während des aktiven Betriebs, also beispielsweise wenn die Anlage eingeschaltet ist und die Längenmessvorrichtung 10 ausgelesen wird, steht externe Energie zur Verfügung, um die Auswertungseinheit 106 und den zusätzlichen magnetischen Sensor 112 zu versorgen. Somit ist nicht unbedingt erforderlich, auch die Zwischenposition energieautark zu ermitteln, da immer dann, wenn eine Zwischenposition ermittelt werden soll, für das Auslesen der Position an eine externe Steuerung ohnehin externe Energie verfügbar ist. Alternativ ist, gerade bei häufiger Bewegung, auch denkbar, dass die Energie der von dem Wiegand-Draht 102 induzierten Spannungsstöße auch die Hall-Sensoren 112a-c und die zugehörige Logik in der Auswertungseinheit 106 zumindest teilweise versorgen.

Somit arbeitet die Längenmessvorrichtung 10 zwar wie ein Inkrementalzähler. Da aber die Zählerinformation stets verfügbar bleibt und der Zähler 108 durch die Spannungsstöße energieautark ist, ergibt sich aus Anwendersicht ein Absolutmesser für die Länge beziehungsweise die Position.

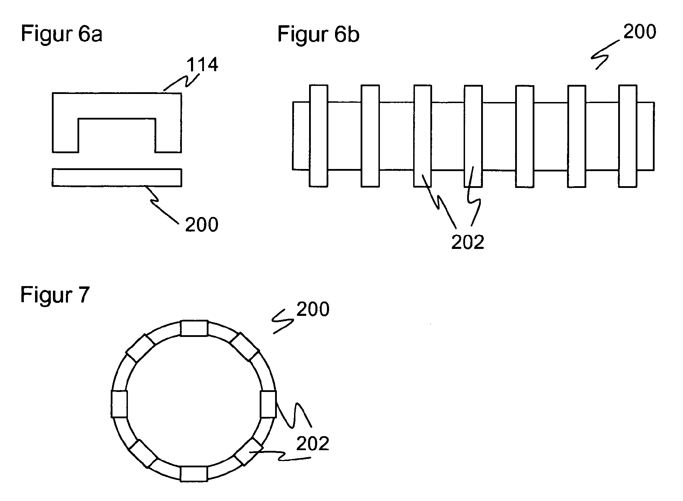

Figur 6a zeigt in einem Querschnitt eine alternative Ausgestaltung der Lesekopfmagneten 114a-b und Figur 6b eine Draufsicht auf eine zugehörige Maßverkörperung 200. Quasi in einer Invertierung der geometrischen Gestaltung der Figur 3 sind hier die Lesekopfmagnete 114 Hufeisenmagnete und die Messteilungen 202 langgestreckt. Die hat den Vorteil einer noch einfacheren Maßverkörperung 202. Der Träger der Maßverkörperung 200, auf dem die Messteilungen 202 angebracht sind, sollte in diesem Fall entweder völlig unmagnetisch, beispielsweise aus Kunststoff, oder zumindest deutlich schmaler sein als die Messteilungen 202 selbst, damit in den Zwischenbereichen zwischen zwei Messteilungen 202 kein magnetischer Kurzschluss stattfindet. Diese Ausführungsform illustriert, dass es für die Längenmessung auf die Möglichkeit der positionsabhängigen Unterdrückung des Magnetfeldes jeweils eines Lesekopfmagneten 114a-b und weniger auf die konkrete geometrische Form von Lesekopfmagneten 114a-b und Messteilungen 202 ankommt.

Figur 7 illustriert in einem Längsschnitt durch eine kreisförmige Maßverkörperung 200, dass das Erfindungsprinzip auf praktisch beliebig verformte Maßverkörperungen erweiterbar ist. So lässt sich auch ein Drehgeber realisieren, der anstelle einer Längserstreckung die Winkelstellung und gegebenenfalls auch die Zahl der Umdrehungen misst. Dies ist ein Beispiel für die fast unbegrenzten dreidimensionalen Gestaltungsmöglichkeiten für die Maßverkörperung 200, mit der eine Anpassung an eine Vielzahl denkbarer Anwendungen möglich ist.

## Patentansprüche

1. Längenmessvorrichtung (10), die ein bistabiles Magnetelement (102), eine langgestreckte Maßverkörperung (200) mit einer Vielzahl von zueinander beabstandeten Messteilungselementen (202) sowie einen Lesekopf (100) aufweist, der relativ zu der Maßverkörperung (200) in deren Längserstreckung beweglich ist und der mindestens einen ersten Lesekopfmagneten (114a) und einen zweiten Lesekopfmagneten (114b) umfasst, die quer zu der Längserstreckung und mit zueinander entgegengesetzter Polarität angeordnet sind, wobei das bistabile Magnetelement (102) Teil des Lesekopfes (100) ist und die Messteilungselemente (202) jeweils ein magnetisches Kurzschlusselement (202) aufweisen, so dass bei Anordnung eines der Lesekopfmagneten (114a-b) bei einem Messteilungselement (202) dessen Magnetfeld (116a-b) überwiegend von dem Kurzschlusselement (202) unterdrückt ist und somit nicht das bistabile Magnetelement (102) durchdringt, und wobei die Lesekopfmagnete (114a-b) so zueinander beabstandet sind, dass das Kurzschlusselement (202) in einer ersten Relativposition des Lesekopfes (100) im Wesentlichen nur das Magnetfeld (116a) des ersten Lesekopfmagneten (114a) und in einer zweiten Relativposition des Lesekopfes (100) im Wesentlichen nur das Magnetfeld (116b) des zweiten Lesekopfmagneten (114b) unterdrückt,
**dadurch gekennzeichnet,**
**dass** der Lesekopf (100) mehrere nebeneinander angeordnete Magnetsensoren (112a-c) aufweist und dass eine Auswertungseinheit (106) vorgesehen ist, um eine Zwischenposition des Lesekopfes (100) gegenüber benachbarten Messteilungselementen (202) durch Vergleich der Stärke des Magnetfeldes an den jeweiligen Positionen der Magnetsensoren (112a-c) zu bestimmen.

2. Längenmessvorrichtung (10) nach Anspruch 1,
wobei das bistabile magnetische Element (102) einen weichmagnetischen Kern (102a) und einen hartmagnetischen Mantel (102b) aufweist und bei Einführen in ein äußeres magnetisches Magnetfeld (116a-b) entgegengesetzter Polarität eine sprunghafte Ummagnetisierung des Kerns (102a) und/oder des Mantels (102b) zeigt, wobei das bistabile magnetische Element (102) insbesondere ein Wiegand-Draht ist.

3. Längenmessvorrichtung (10) nach Anspruch 1 oder 2,
wobei dem bistabilen magnetischen Element (102) eine Spule (104) zugeordnet ist, insbesondere das bistabile magnetische Element (102) in einem Innenraum der Spule (104) angeordnet ist, und wobei in die Spule (104) bei Ummagnetisierung des bistabilen magnetischen Elements (102) ein Spannungsstoß induzierbar ist.

4. Längenmessvorrichtung (10) nach einem der vorhergehenden Ansprüche,
wobei ein nichtflüchtiger Zähler (108) vorgesehen ist, welcher die durch Relativbewegung des Lesekopfes (100) gegenüber der Maßverkörperung (200) überfahrenen Messteilungselemente (202) zählt, insbesondere indem der Zählerstand (108) aufgrund von durch das bistabile magnetische Element (102) induzierten Spannungsstößen herauf- oder herabzählbar ist.

5. Längenmessvorrichtung (10) nach Anspruch 4,
wobei die Auswertungseinheit (106) dafür ausgebildet ist, aus dem Zählerstand (108) die Absolutposition des Lesekopfes (100) gegenüber der Maßverkörperung (200) zu bestimmen, so dass die Längenmessvorrichtung (10) als absolute Längenmessvorrichtung (10) ausgebildet ist.

6. Längenmessvorrichtung (10) nach einem der vorhergehenden Ansprüche,
wobei die Magnetsensoren (112) Hall-Sensoren, AMR-Sensoren oder GMR-Sensoren sind, und wobei in der Auswertungseinheit (106) mit den Magnetsensoren (112) eine Richtung der Relativbewegung des Lesekopfes (100) gegenüber der Maßverkörperung (200) bestimmbar ist.

7. Längenmessvorrichtung (10) nach einem der vorhergehenden Ansprüche,
wobei die Auswertungseinheit (106) und/oder der zusätzliche Magnetsensor (112) durch von dem bistabilen magnetischen Element (102) induzierte Spannungsstöße mit Energie versorgbar ist.

8. Längenmessvorrichtung (10) nach einem der vorhergehenden Ansprüche,
wobei die Kurzschlusselemente (202) einen u-förmigen Bügel aufweisen, dessen Enden die Pole des ersten Lesekopfmagneten (114a) oder des zweiten Lesekopfmagneten (114b) in der ersten Relativposition beziehungsweise der zweiten Relativposition umschließen, oder wobei erster Lesekopfmagnet (114a) und zweiter Lesekopfmagnet (114b) hufeisenförmig und die Kurzschlusselemente (202) langgestreckt ausgebildet sind, um die Pole des Hufeisens kurzzuschließen.

9. Längenmessvorrichtung (10) nach einem der vorhergehenden Ansprüche,
wobei die Kurzchlusselemente (202), insbesondere die Maßverkörperung (200) mitsamt den Messteilungselementen (202), magnetisches Material wie Stahl oder Eisen aufweisen.

10. Längenmessvorrichtung (10) nach einem der vorhergehenden Ansprüche,
wobei das bistabile magnetische Element (102) und die Lesekopfmagnete (114a-b) parallel zueinander ausgerichtet sind, und wobei die Lesekopfmagnete (114a-b) in jeweils gleichem Abstand zu beiden Seiten des bistabilen magnetischen Elements (102) angeordnet sind, insbesondere so, dass die Lesekopfmagnete (114a-114b) zueinander einen kleineren Abstand aufweisen als zwei benachbarte Messteilungselemente (202).

11. Längenmessvorrichtung (10) nach einem der vorhergehenden Ansprüche,
wobei die langgestreckte Maßverkörperung (200) Verwindungen oder Bögen aufweist, um sich an unterschiedliche auszumessende Geometrien anzupassen und die insbesondere als Drehwinkelmessvorrichtung ausgebildet ist, indem die langgestreckte Maßverkörperung (200) kreisförmig gebogen ist.

12. Verfahren zur Längenmessung, bei dem ein Lesekopf (100), der mindestens einen ersten Lesekopfmagneten (114a) und einen zweiten Lesekopfmagneten (114b) umfasst, relativ zu einer langgestreckten Maßverkörperung (200) mit einer Vielzahl von zueinander beabstandeten Messteilungselementen (202) bewegt wird, wobei die Lesekopfmagneten (114a-b) quer zu der Längserstreckung und mit zueinander entgegengesetzter Polarität angeordnet werden und wobei zur Positionsbestimmung des Lesekopfes (100) ein bistabiles magnetisches Element (102) verwendet wird, wobei das bistabile Magnetelement (102) als Teil des Lesekopfes (100) mitbewegt wird und in einer ersten Relativposition des Lesekopfes (100) der erste Lesekopfmagnet (114a) und in einer zweiten Relativposition des Lesekopfes (100) der zweite Lesekopfmagnet (114b) derart an einem magnetischen Kurzschlusselement (202) eines Messteilungselements (202) angeordnet wird, dass im Wesentlichen nur jeweils das Magnetfeld (116a-b) des anderen, also des zweiten Lesekopfmagneten (114b) beziehungsweise des ersten Lesekopfmagneten (114a), das bistabile magnetische Element (102) durchdringt,
**dadurch gekennzeichnet,**
**dass** mit mehreren nebeneinander in dem Lesekopf (100) angeordneten Magnetsensoren (112a-c) durch Auswertung der Stärke des Magnetfeldes eine Zwischenposition des Lesekopfes (100) gegenüber benachbarten Messteilungselementen (202) bestimmt wird.

13. Verfahren nach Anspruch 12,
wobei der erste Lesekopfmagnet (114a) und/oder der zweite Lesekopfmagnet (114b) während der Relativbewegung eine sprunghafte Ummagnetisierung in dem bistabilen Magnetelement (102) verursachen, und wobei die überfahrenen Messteilungselemente (202) anhand eines von der Ummagnetisierung induzierten Spannungsstoßes in einem nichtflüchtigern Zähler (108) gezählt werden, wobei aus dem Zählerstand (108) die Absolutposition des Lesekopfes (100) gegenüber der Maßverkörperung (200) bestimmt wird.

14. Verfahren nach Anspruch 12 oder 13,
wobei die Magnetsensoren (112) Hall-Sensoren, AMR-Sensoren oder GMR-Sensoren sind und mit deren Hilfe, eine Richtung der Relativbewegung des Lesekopfes (100) gegenüber der Maßverkörperung (200) bestimmt wird.

15. Verfahren nach einem der Ansprüche 12 bis 14,
wobei die für das Zählen, das Bestimmen der Absolutposition, die Richtungsbestimmung und/oder die Bestimmung der Zwischenposition benötigte Energie durch die bei Ummagnetisierung des bistabilen magnetischen Elements (102) induzierten Spannungsstöße erzeugt wird.

## Claims

1. A length measurement apparatus (10) which has a bistable magnetic element (102), an elongated physical scale (200) having a plurality of measurement graduation elements (202) spaced apart from one another as well as a reading head (100) which is movable relative to the physical scale (200) in its longitudinal extent and which includes at least one first reading head magnet (114a) and one second reading head magnet (114b) which are arranged transverse to the longitudinal extent and with opposite polarity to one another, wherein the bistable magnetic element (102) is part of the reading head (100) and the measurement graduation elements (202) each have a magnetic short-circuit element (202) so that, on the arrangement of one of the reading head magnets (114a-b) at a measurement graduation element (202), its magnetic field (116a-b) is predominantly suppressed by the short-circuit element (202) and thus does not penetrate through the bistable magnetic element (102), and wherein the reading head magnets (114a-b) are spaced apart from one another so that the short-circuit element (202) substantially only suppresses the magnetic field (116a) of the first reading head magnet (114a) in a first relative position of the reading head (100) and substantially only suppresses the magnetic field (116b) of the second reading head magnet (114b) in a second relative position of the reading head (100),
**characterized in that**
the reading head (100) has a plurality of magnetic sensors (112a-c) arranged next to one another and **in that** an evaluation unit (106) is provided to determine an intermediate position of the reading head (102) with respect to adjacent measurement graduation elements (202) by comparing the strength of the magnetic field at the respective positions of the magnetic sensors (112a-c).

2. A length measurement apparatus (10) in accordance with claim 1,
wherein the bistable magnetic element (102) has a soft magnetic core (102a) and a hard magnetic jacket (102b) and shows an abrupt reverse magnetization of the core (102a) and/or of the jacket (102b) on introduction into an external magnetic field (116a-b) of a magnet of opposite polarity, with the bistable magnetic element (102) in particular being a Wiegand wire.

3. A length measurement apparatus (10) in accordance with claim 1 or 2,
wherein a coil (104) is associated with the bistable magnetic element (102), wherein the bistable magnetic element (102) is in particular arranged in an inner space of the coil (104), and wherein a voltage surge can be induced in the coil (104) on the reverse magnetization of the bistable magnetic element (102).

4. A length measurement apparatus (10) in accordance with any of the preceding claims,
wherein a non-volatile counter (108) is provided which counts the measurement graduations (202) traveled over by relative movement of the reading head (100) with respect to the physical scale (200), in particular in that the count (108) can be counted up or down on the basis of voltage surges induced by the bistable magnetic element (102).

5. A length measurement apparatus (10) in accordance with claim 4,
wherein an evaluation unit (106) is provided in which the absolute position of the reading head (100) with respect to the physical scale (200) can be determined from the count (108) so that the length measuring apparatus (10) is made as an absolute length measurement apparatus (10).

6. A length measurement apparatus (10) in accordance with any of the preceding claims,
wherein the magnetic sensors (112) are Hall sensors, AMR sensors, or GMR sensors, and wherein a direction of the relative movement of the reading head (100) with respect to the physical scale (200) can be determined in the evaluation unit (106) using the magnetic sensors (112).

7. A length measurement apparatus (10) in accordance with any of the preceding claims,
wherein the evaluation unit (106) and/or the additional magnetic sensor (112) can be supplied with energy by voltage surges induced by the bistable magnetic element (102).

8. A length measurement apparatus (10) in accordance with any of the preceding claims,
wherein the short-circuit elements (202) have a U-shaped hoop whose ends enclose the poles of the first reading head magnet (114a) or of the second reading head magnet (114b) in the first relative position or in the second relative position respectively, or wherein the first reading head magnet (114a) and the second reading head magnet (114b) are made in horseshoe shape and the short-circuit elements (202) are made elongated to short-circuit the poles of the horseshoe.

9. A length measurement apparatus (10) in accordance with any of the preceding claims,
wherein the short-circuit elements (202), in particular the physical scale (200) together with the measurement graduation elements (202), comprise magnetic material such as steel or iron.

10. A length measurement apparatus (10) in accordance with any of the preceding claims,
wherein the bistable magnetic element (102) and the reading head magnets (114a-b) are aligned parallel to one another, and wherein the reading head magnets (114a-b) are arranged at respective equal spacings from both sides of the bistable magnetic element (102), in particular so that the reading head magnets (114a-114b) have a smaller spacing from one another than two adjacent measurement graduation elements (202).

11. A length measurement apparatus (10) in accordance with any of the preceding claims,
wherein the elongated physical scale (200) has twists or arcs to adapt to different geometries to be measured and which is in particular made as an encoder for angle measurements in that the elongated physical scale (200) has a circular curvature.

12. A method for length measurement, wherein a reading head (100) which includes at least one first reading head magnet (114a) and one second reading head magnet (114b) is moved relative to an elongated physical scale (200) having a plurality of measurement graduation elements (202) spaced apart from one another, wherein the reading head magnets (114a-b) are arranged transverse to the longitudinal extent and are arranged with opposite polarity to one another, and wherein a bistable magnetic element (102) is used for determining the position of the reading head (100), wherein the bistable magnetic element (102) is moved along as part of the reading head (100) and wherein, in a first relative position of the reading head (100), the first reading head magnet (114a) and, in a second relative position of the reading head (100), the second reading head magnet (114b) are arranged at a magnetic short-circuit element (202) of a measurement graduation element (202) such that substantially only the respective magnetic field (114a-b) of the other reading head magnet, that is of the second reading head magnet (114b) or of the first reading head magnet (114a), penetrates through the bistable magnetic element (102),
**characterized in that**
an intermediate position of the reading head (100) with respect to adjacent measurement graduation elements (202) is determined by evaluation of the strength of the magnetic field using a plurality of magnetic sensors (112a-c) arranged next to one another.

13. A method in accordance with claim 12,
wherein the first reading head magnet (114a) and/or the second reading head magnet (114b) cause an abrupt reverse magnetization in the bistable magnetic element (102) during the relative movement, and wherein the measurement graduation element (202) traveled over are counted with reference to a voltage surge induced by the reverse magnetization in a non-volatile counter (108), wherein the absolute position of the reading head (100) with respect to the physical scale (200) is determined from the count (108).

14. A method in accordance with claim 12 or 13,
wherein the magnet sensors (112) are Hall sensors, AMR sensors, or GMR sensors and a direction of the relative movement of the reading head (100) with respect to the physical scale (200) is measured with the magnet sensors (112).

15. A method in accordance with any of claims 12 to 14,
wherein the energy required for counting, for determining the absolute position, for determining the direction and/ or for determining the intermediate position is produced by the voltage surges induced on the reverse magnetization of the bistable magnetic element (102).

## Revendications

1. Dispositif de mesure de longueur (10), qui comprend un élément magnétique bistable (102), un élément corporel de mesure (200) étiré en longueur avec une pluralité d'éléments de subdivision de mesure (202) écartés les uns des autres, ainsi qu'une tête de lecture (100), qui est déplaçable par rapport à l'élément corporel de mesure (200) dans son extension longitudinale et qui comporte au moins un premier aimant de tête de lecture (114a) et un second aimant de tête de lecture (114b), lesquels sont agencés transversalement à l'extension longitudinale et avec polarité mutuellement opposée, dans lequel l'élément magnétique bistable (102) fait partie de la tête de lecture (100) et les éléments de subdivision de mesure (202) comprennent chacun un élément de court-circuit magnétique (202), de sorte que lorsque l'un des aimants de tête de lecture (114a-b) est agencé au niveau d'un élément de subdivision de mesure (202) son champ magnétique (116a-b) est en majeure partie inhibé par l'élément de court-circuit (202) et ne traverse donc pas l'élément magnétique bistable (102), et dans lequel les aimants de tête de lecture (114a-b) sont écartés les uns des autres de telle façon que, dans une première position relative de la tête de lecture (100), l'élément de court-circuit (202) inhibe essentiellement uniquement le champ magnétique (116a) du premier aimant de tête de lecture (114a) et que, dans une seconde position relative de la tête de lecture (100), l'élément de court-circuit (202) inhibe essentiellement uniquement le champ magnétique (116b) du second aimant de tête de lecture (114b),
**caractérisé en ce que**
la tête de lecture (100) comprend plusieurs capteurs à aimant (112a-c) agencés les uns à côté des autres, et **en ce qu'**il est prévu une unité d'évaluation (106) pour déterminer une position intermédiaire de la tête de lecture (100) par rapport à des éléments de subdivision de mesure (202) voisins par comparaison de l'intensité du champ magnétique au niveau des positions respectives des capteurs à aimant (112a-c).

2. Dispositif de mesure de longueur (10) selon la revendication 1,
dans lequel l'élément magnétique bistable (102) comprend un noyau magnétique doux (102a) et une enveloppe magnétique dur (102b) et présente, lors de l'entrée dans un champ magnétique extérieur (116a-b) de polarité opposée, une inversion magnétique soudaine du noyau (102a) et/ou de l'enveloppe (102b), et dans lequel l'élément magnétique bistable (102) est en particulier un fil de Wiegand.

3. Dispositif de mesure de longueur (10) selon la revendication 1 ou 2,
dans lequel une bobine (104) est associée à l'élément magnétique bistable (102), en particulier l'élément magnétique bistable (102) est agencé dans une chambre intérieure de la bobine (104), et dans lequel lors de l'inversion de l'aimantation de l'élément magnétique bistable (102) une saute de tension est susceptible d'être induite dans la bobine (104)

4. Dispositif de mesure de longueur (10) selon l'une des revendications précédentes,
dans lequel il est prévu un compteur non volatile (108), qui compte les éléments de subdivision de mesure (202) parcourus par mouvement relatif de la tête de lecture (100) par rapport à l'élément corporel de mesure (200), en particulier en ce que l'état du compteur (108) est susceptible d'être incrémenté ou décrémenté en raison des sautes de tension induites par l'élément magnétique bistable (102).

5. Dispositif de mesure de longueur (10) selon la revendication 4,
dans lequel l'unité d'évaluation (106) est réalisée pour déterminer, à partir de l'état du compteur (108), la position absolue de la tête de lecture (100) par rapport à l'élément corporel de mesure (200), de sorte que le dispositif de mesure de longueur (10) est réalisé comme un dispositif de mesure de longueur (10) absolue.

6. Dispositif de mesure de longueur (10) selon l'une des revendications précédentes,
dans lequel les capteurs magnétiques (112) sont des capteurs de Hall, des capteurs AMR ou des capteurs GMR, et dans lequel une direction du mouvement relatif de la tête de lecture (100) par rapport à l'élément corporel de mesure (200) est susceptible d'être déterminée dans l'unité d'évaluation (106) avec les capteurs magnétiques (112).

7. Dispositif de mesure de longueur (10) selon l'une des revendications précédentes,
dans lequel l'unité d'évaluation (106) et/ou un capteur magnétique additionnel (112) est susceptible d'être alimenté en énergie par des sautes de tension induites par l'élément magnétique bistable (102).

8. Dispositif de mesure de longueur (10) selon l'une des revendications précédentes,
dans lequel les éléments de court-circuit (202) comprennent un arceau en forme de u, dont les extrémités entourent les pôles du premier aimant de tête de lecture (114a) ou du second aimant de tête de lecture (114b) dans la première position relative ou respectivement la seconde position relative, ou dans lequel le premier aimant de tête de lecture (114a) et le second aimant de tête de lecture (114b) sont réalisés en forme de fer à cheval et les éléments de court-circuit (202) sont réalisés étirés en longueur, afin de mettre en court-circuit les pôles du fer à cheval.

9. Dispositif de mesure de longueur (10) selon l'une des revendications précédentes,
dans lequel les éléments de court-circuit (202), en particulier l'élément corporel de mesure (200) ensemble avec les éléments de subdivision de mesure (202), comporte un matériau magnétique tel que de l'acier ou du fer.

10. Dispositif de mesure de longueur (10) selon l'une des revendications précédentes,
dans lequel l'élément magnétique bistable (102) et les aimants de tête magnétique (114a-b) sont orientés parallèlement les uns aux autres, et dans lequel les aimants de tête magnétique (114a-b) sont agencés respectivement à la même distance sur les deux côtés de l'élément magnétique bistable (102), en particulier de telle façon que les aimants de tête de lecture (114a-114b) présentent l'un par rapport à l'autre une distance plus petite que deux éléments de subdivision de mesure (202) voisins.

11. Dispositif de mesure de longueur (10) selon l'une des revendications précédentes,
dans lequel l'élément corporel de mesure (200) étiré en longueur comporte des torsades ou des arcs, afin de s'adapter à différentes géométries à mesurer, et est en particulier réalisé comme un appareil de mesure d'angle de rotation, du fait que l'élément corporel de mesure (200) étiré en longueur est cintré en forme de cercle.

12. Procédé pour la mesure de longueur, dans lequel une tête de lecture (100), qui comprend au moins un premier aimant de tête de lecture (114a) et un second aimant de tête de lecture (114b), est déplacée par rapport à un élément corporel de mesure (200) étiré en longueur avec une pluralité d'éléments de subdivision de mesure (202) écartés les uns des autres, dans lequel les aimants de tête de lecture (114a-b) sont agencés transversalement à l'extension longitudinale et avec polarité mutuellement opposée, et dans lequel, pour la détermination de position de la tête de lecture (100) on utilise un élément magnétique bistable (102), ledit élément magnétique bistable (102) étant déplacé conjointement en tant que partie de la tête de lecture (100) et, dans une première position relative de la tête de lecture (100) le premier aimant de tête de lecture (114a) est agencé sur un élément de court-circuit magnétique (202) d'un élément de subdivision de mesure (202), tandis que dans une seconde position relative de la tête de lecture (100) le second aimant de tête de lecture (114b) est agencé sur un élément de court-circuit magnétique (202) d'un élément de subdivision de mesure (202) de telle façon que sensiblement uniquement le champ magnétique (116a-b) de l'autre, donc du second aimant de tête de lecture (114b) ou respectivement du premier aimant de tête de lecture (114a), traverse respectivement l'élément magnétique bistable (102),
**caractérisé en ce que** l'on détermine, avec plusieurs capteurs à aimant (112a-c) agencés les uns à côté des autres dans la tête de lecture (100) et par évaluation de l'intensité du champ magnétique, une position intermédiaire de la tête de lecture (100) par rapport aux éléments de subdivision de mesure (202) voisins.

13. Procédé selon la revendication 12,
dans lequel le premier aimant de tête de lecture (114a) et/ou le second aimant de tête de lecture (114b) provoque pendant le mouvement relatif une inversion soudaine de l'aimantation dans l'élément magnétique bistable (102), et les éléments de subdivision de mesure (202) parcourus sont comptés dans un compteur non volatile (108) au moyen d'une saute de tension induite par l'aimantation environnante, et l'on détermine à partir de l'état du compteur (108) la position absolue de la tête de lecture (100) par rapport à l'élément corporel de mesure (200).

14. Procédé selon la revendication 12 ou 13,
dans lequel les capteurs magnétiques (112) sont des capteurs de Hall, des capteurs AMR ou des capteurs GMR et l'on détermine avec leur aide une direction du mouvement relatif de la tête de lecture (100) par rapport à l'élément corporel de mesure (200).

15. Procédé selon l'une des revendications 12 à 14,
dans lequel l'énergie nécessaire pour le comptage, la détermination de la position absolue, la détermination de direction et/ou la détermination de la position intermédiaire est engendrée par les sautes de tension induites lors de l'inversion d'aimantation de l'élément magnétique bistable (102).
